# FASCICULE DE BREVET EUROPEEN

(11) **EP 2 176 178 B1**
(45) Date de publication et mention de la délivrance du brevet: **20.04.2011**
(21) Numéro de dépôt: 08826346.2
(22) Date de dépôt: 10.07.2008
(51) Int. Cl.: C03B 5/235

(54) **FOUR ET PROCEDE OXY-COMBUSTIBLE POUR LA FUSION DE MATIERES VITRIFIABLES**
OFEN UND SAUERSTOFFBRENNVERFAHREN ZUR SCHMELZUNG VERGLASUNGSFÄHIGER MATERIALIEN
OVEN AND OXY-COMBUSTIBLE METHOD FOR MELTING VITRIFIABLE MATERIALS

(30) Priorité: 10.07.2007 FR 0756398
(43) Date de publication de la demande: 21.04.2010
(73) Titulaire: L'Air Liquide Société Anonyme pour l'Etude et l'Exploitation des Procédés Georges Claude, 75007 Paris (FR)
(72) Inventeur: BEAUDOIN, Philippe, F-78280 Guyancourt (FR); CONSTANTIN, Gabriel, F-78530 Buc (FR); DUPERRAY, Pascal, F-78180 Montigny Le Bretonneux (FR); GIANG, Son Ha, F-94370 Sucy-En-brie (FR); GRAND, Benoit, F-78000 Versailles (FR); JARRY, Luc, F-92190 Meudon (FR); KALCEVIC, Robert, 78000 Versailles (FR); LEROUX, Bertrand, F-91310 Linas (FR); POIRIER, Alban, 78150 Le Chesnay (FR); TSIAVA, Rémi, F-91250 Saint Germain-les-Corbeil (FR)
(74) Mandataire: De Vleeschauwer, Natalie Y.L.D.
(86) Numéro de dépôt international: PCT/FR2008/051304
(87) Numéro de publication internationale: WO 2009/010697

(56) Documents cités:
- EP-A- 0 805 123
- EP-A- 0 850 884
- EP-A- 0 872 690
- US-A- 3 592 622

## Description

L'invention concerne un procédé et un four oxy-combustible pour la fusion de matière vitrifiable et l'obtention de verre fondu.

L'invention concerne notamment un four de fusion ayant une capacité ou tirée inférieure ou égale à 400 tonnes de verre fondu par jour. De tels fours de fusion sont par exemple utilisés dans la fabrication de verre creux et de verre gobeleterie où ils alimentent les machines de formage en verre fondu.

L'invention concerne plus particulièrement un tel four de fusion dit « à flamme ». Dans un four à flamme, au moins une partie de l'énergie de fusion est fournie par au moins une flamme dans la chambre de fusion, ladite au moins une flamme étant réalisée au moyen d'un brûleur.

Le document antérieur US-A-3592622 décrit un procédé permettant d'augmenter la température du verre dans un four de fusion-affinage chauffé par aérocombustion sans augmentation correspondante de la température de la voûte du four.

Selon US-A-359622, ceci est réalisé par l'apport au four d'énergie thermique auxiliaire fournie par une flamme non-lumineuse générée par un oxy-brûleur. Ladit flamme est dirigée dans le sens de la longueur du four et vers le bas de manière à permettre une combustion substantiellement complète avant que les produits de combustion n'entrent en contact avec la surface du verre fondu.

Le document antérieur US-A-359622 divulgue en particulier un tel four de fusion-affinage avec une chambre d'une longueur de 36 pieds (environ 10,1 m) qui est chauffée par des aérobrûleurs montés de manière espacés dans les parois latérales.

Afin d'augmenter la température du verre, ladite chambre est munie de deux oxybrûleurs dans la paroi amont.

Les axes des deux oxy-brûleurs convergent à une distance de 12 à 14 pieds (de 3, 7 à 4,3 m environ) de la paroi amont. L'énergie thermique auxiliaire fournie par ces deux oxy-brûleurs s'élève à 10,5% environ de l'énergie thermique totale du four.

Pour réduire les émissions polluantes, telles que les NOx, et pour limiter la consommation énergétique des fours de fusion à flamme, il est possible de remplacer l'air, comme comburant, pour la combustion, par un gaz riche en oxygène. De tels fours sont appelés fours à flamme oxy-combustibles ou fours oxy-combustibles. La combustion au moyen d'un gaz riche en oxygène est appelée oxy-combustion et les brûleurs fonctionnant avec un gaz riche en oxygène comme comburant sont appelés des oxy-brûleurs.

Dans les fours de fusion oxy-combustibles, la configuration des brûleurs est généralement constituée d'un nombre de brûleurs placés sur une partie de la longueur du four et dirigés perpendiculairement à l'axe du four/de la chambre de combustion. La puissance de chacun des brûleurs est individuellement ajustée, ou ajustée par groupe de brûleurs, pour établir le profil thermique désiré dans le four. La puissance totale des brûleurs est ajustée en fonction de la tirée du four.

D'autres configurations de brûleurs ont été proposées.

Il existe ainsi également des fours de fusion dits « à boucle » dans lesquels (1) la configuration des brûleurs est constituée d'un nombre très faible de brûleurs (typiquement un ou deux) dirigés de manière en substance parallèle à l'axe longitudinal du four et (2) la ou les ouvertures d'évacuation de fumées sont positionnées de manière à créer une ou des flammes en forme de boucle.

La présente invention a pour but de fournir un procédé oxy-combustible amélioré pour la fusion de matières vitrifiables dans un four de capacité limitée, ainsi qu'un four de fusion améliorée de capacité limitée apte à être utilisé dans un tel procédé.

La présente invention concerne plus particulièrement un procédé pour l'obtention de verre fondu par la fusion de matières vitrifiables dans une chambre de fusion.

La chambre de fusion est définie par une paroi amont (également appelée pignon d'enfournement ou pignon arrière et en anglais : « back wall »), une paroi aval (également appelée pignon de sortie ou pignon avant et en anglais : « front wall »), des parois latérales, une sole et une voûte. Elle a une superficie interne inférieure ou égale à 200 m² et son axe longitudinal s'étend entre la paroi amont et la paroi aval. La chambre de fusion comporte une zone amont du côté de la paroi amont et une zone aval du côté de la paroi aval.

Dans le procédé suivant l'invention, on enfourne des matières vitrifiables dans la zone amont. On fond les matières vitrifiables avec obtention de verre fondu en fournissant de l'énergie de fusion dans la chambre de fusion. On évacue le verre fondu dans la zone aval.

On fournit au moins 70% de l'énergie de fusion par deux oxy-brûleurs. Les deux oxy-brûleurs débouchent dans la chambre de fusion à travers la paroi amont et sont situés de côté et autre du plan vertical comprenant l'axe longitudinal de la chambre de fusion (c'est-à-dire le plan vertical dans lequel se situe ledit axe longitudinal). Pour fournir ces au moins 70% de l'énergie de fusion, on alimente les deux oxy-brûleurs en combustible et en comburant et on injecte le combustible et le comburant dans la chambre de fusion au moyen de ces deux oxy-brûleurs de manière à créer deux flammes et des fumées. Chacune des deux flammes présente un axe d'injection. Le comburant est un comburant riche en oxygène et en particulier un comburant dont la teneur en oxygène est d'au moins 70%vol.

On évacue les fumées de la chambre de fusion par au moins une ouverture d'évacuation de fumées.

L'invention se caractérise notamment en ce que les axes d'injection des deux flammes se rejoignent à une distance d de la paroi amont entre 1/3 et ¾ de la longueur L de la chambre de fusion.

La superficie interne de la chambre de fusion est de préférence de 10 à 90 m².

Le comburant a de préférence une teneur en oxygène d'au moins 80%vol.

Les deux oxy-brûleurs sont de préférence positionnés symétriquement de côté et autre par rapport au plan vertical comprenant l'axe longitudinal de la chambre de fusion.

Les axes d'injection des deux flammes se rejoignent de préférence à une distance d de la paroi amont d'environ 2/3 de la longueur L de la chambre (entre 7/12 et 9/12 de la longueur L de la chambre).

Les axes d'injection des deux flammes se rejoignent de préférence dans le plan vertical comprenant l'axe longitudinal de la chambre de fusion.

Par axe d'injection d'une flamme on comprend l'orientation ou la direction initiale de la flamme, c'est-à-dire à la sortie du brûleur.

Le procédé suivant l'invention présente un nombre d'avantages.

Il a en effet été constaté que, dans un four d'une telle superficie interne, le procédé suivant l'invention avec l'orientation des deux flammes telle que décrite ci-dessus, avec notamment des axes d'injection qui se rejoignent dans le four, permet une meilleure efficacité du transfert thermique vers la charge, permettant ainsi de réaliser une tirée (en anglais : « pull rate ») plus élevée du four et/ou une meilleure qualité du verre fondu, notamment en ce qui concerne l'homogénéité de la composition et de la température du verre fondu à la sortie du four, ou encore de réaliser des économies de combustible.

Cette orientation des deux flammes avec un point de rencontre qui crée une zone de combustion à haute température améliore notamment le contrôle des écoulements du verre en fusion dans le bain de verre et son homogénéité. Cette orientation permet également d'augmenter le temps de résidence des fumées au-dessus de la charge, améliorant ainsi le transfert thermique vers la charge et de diminuer la température des fumées à la sortie du four.

Du fait que, pour une puissance donnée, les volumes de gaz (notamment de comburant et de fumées) en oxy-combustion sont fortement réduites par rapport aux volumes de gaz en aérocombustion, le risque d'entraînement de matières vitrifiables ou de composant du verre fondu avec la flamme et les fumées, vu l'orientation des deux flammes, est réduit, et de ce fait, le risque d'endommagement des parois de la chambre de fusion et de pertes en matières vitrifiables et/ou en composants.

Un autre avantage de la présente invention est qu'il est possible de procéder à une maintenance d'un des deux brûleurs, ou des dispositifs d'alimentation en combustible et/ou en comburant d'un des deux brûleurs, sans avoir à interrompre la fusion et donc sans refroidissement du four qui peut amener à vider le bain de fusion de matières vitrifiables et de verre fondu, évitant ainsi des temps d'arrêt et des pertes de production importantes.

La présence de deux oxy-brùleurs débouchant dans la chambre de fusion à travers la paroi amont permet, quand un des oxy-brûleurs est mis hors fonction pour sa maintenance ou pour la maintenance de ses moyens d'alimentation, voire pour la maintenance des moyens pour le préchauffage du combustible et/ou du comburant alimentés audit oxy-brûleur, de pouvoir basculer la puissance sur l'autre des deux oxy-brûleurs.

La puissance du brûleur mise hors fonction peut partiellement ou totalement être compensée par l'autre des deux brûleurs.

La teneur en oxygène du comburant est avantageusement supérieure à 85%vol, de préférence d'au moins 90%vol, plus de préférence d'au moins 95%vol, voire d'au moins 99%vol.

Selon une forme de réalisation particulièrement avantageuse qui augmente la flexibilité du procédé et du four suivant l'invention, les deux oxy-brûleurs sont des oxy-brûleurs à flamme orientable, c'est-à-dire des oxy-brûleurs qui permettent de faire varier l'orientation de l'axe d'injection de la flamme. De tels brûleurs à flamme orientable sont notamment décrits dans les demandes de brevets WO 2008/003908 et FR 2903479 de la Société L'AIR LIQUIDE. L'utilisation de ce type de brûleurs permet notamment de déplacer l'endroit dans la chambre de fusion où les axes d'injection des deux flammes se rejoignent. Ceci permet par exemple de prendre en compte des changements dans la tirée du four et/ou dans la composition des matières vitrifiables.

De préférence, on transporte au moins une partie des fumées évacuées vers des moyens de récupération de chaleur.

Il est possible d'améliorer encore plus le bilan énergétique du procédé de fusion en préchauffant au moins une partie des réactifs (comburant et/ou combustible), et en particulier au moins une partie du comburant, en amont des deux brûleurs. Ledit préchauffage est avantageusement effectué dans les moyens de récupération de chaleur, et notamment en utilisant un ou des échangeurs de chaleur. Ces échangeurs de chaleurs sont typiquement placés sur le circuit d'évacuation des fumées en aval du four.

Cette technique du préchauffage des réactifs permet un gain d'environ 10% sur les consommations d'oxygène et de combustible. Le gain exact est fonction du niveau de température atteint par les réactifs, du design du four et du type de brûleur utilisé.

Afin de rendre l'implantation d'une telle technologie de l'oxy-combustion à réactifs chauds intéressante et rentable pour les fours de petite taille, en dépit de la complexité de sa mise en oeuvre, du prix de l'installation par rapport à l'économie générée et de l'encombrement de l'installation de préchauffage, il est proposée, selon une des modes de réalisation de l'invention que les moyens de récupération de chaleur comportent au moins un premier échangeur de chaleur situé à l'extérieure de la chambre de fusion et essentiellement derrière la paroi amont dans laquelle les deux oxy-brûleurs sont montés et qu'on préchauffe au moins une partie, et de préférence la totalité, du comburant fourni auxdits deux oxy-brûleurs dans le au moins un premier échangeur de chaleur par échange thermique avec un fluide caloporteur.

L'invention, rend ainsi possible de bénéficier du gain énergétique apporté par la technique du préchauffage des réactifs dans un four avec une chambre de fusion de faible capacité, et ceci avec une mise en oeuvre relativement simple, un prix raisonnable de l'installation et sans trop d'encombrement.

Il est à noter que dans le présent contexte, le terme « chambre de fusion » couvre également les chambres de fusion/affinage.

Le procédé suivant l'invention est réalisé avec une chambre de fusion est une chambre de faible capacité. La chambre présente typiquement une capacité ou tirée inférieure ou égale à 400 tonnes de verre fondu par jour, de préférence de 50 à 200 tonnes par jour. Ceci correspond généralement à une chambre ayant une superficie interne (= longueur L x largueur 1) inférieure ou égale à 200 m², et de préférence de 10 à 90 m².

Dans ce qui suit, le terme « chambre de faible capacité » se réfère à une chambre selon l'une quelconque des descriptions ci-dessus.

Chacun des deux oxy-brûleurs est muni de moyens d'alimentation en combustible permettant de régler le débit de combustible envoyé audit brûleur.

Il a en particulier été constaté qu'il est possible dans les chambres de faible capacité de réaliser une bonne couverture de la charge (matières vitrifiables et verre fondu) par les flammes et un bon profil thermique avec deux oxy-brûleurs à combustion étagée et/ou à impulsion variable montés dans la paroi amont.

La combustion étagée est une combustion dans deux zones de combustion successives. Dans la première zone de combustion, un des réactifs (combustible ou comburant) est injecté en une quantité inférieure à la quantité stoechiométrique pour la combustion. Dans cette première zone, il y a donc combustion riche en combustible (dans le cas d'injection substoechiométrique de comburant et plus particulièrement d'oxygène) ou combustion riche en oxygène (dans le cas d'injection substoechiométrique de combustible). Le complément du réactif injecté en substoechiométrie est injecté à distance de la première zone de combustion, créant ainsi une deuxième zone de combustion dans lequel le complément du réactif injecté en substoechiometrie réagit avec le résidu de la combustion de la première zone et notamment avec le résidu dans les fumées de l'autre réactif.

Le plus souvent, le réactif injecté en substoechiométric dans la première zone de combustion est le comburant.

Des brûleurs à combustion étagée, également dits « à jets séparés » pouvant avantageusement être utilisés dans le procédé et le four suivant l'invention sont notamment décrits dans WO-A-O2/081967, WO-A-2004/094902 et WO-A-2005/059440 au nom de la demanderesse et sont commercialisés par la société demanderesse sous la dénomination commerciale ALGLASS^{™} SUN.

Les oxy-brûleurs a combustion étagée présentent les avantages suivants :
- une puissance flexible, pouvant notamment être adaptée à la variation de tirée requise pour le four,
- une longueur de flamme réglable.

Ces brûleurs permettent en particulier de faire varier la longueur de la flamme indépendamment de la puissance de fonctionnement et ainsi de répartir la chauffe sur la longueur de la chambre.

Les brûleurs à impulsion variable, comportant ou non une lance oxygène pour renforcer la flexibilité, permettent d'ajuster la longueur de la flamme par le régalage de la vitesse d'injection des réactifs (comburant et combustible). Les brûleurs à impulsion étagée permettent également de faire varier la longueur de la flamme indépendamment de la puissance de fonctionnement. Le combustible est le plus souvent un combustible gazeux.

Des brûleurs à impulsion variable pouvant avantageusement être utilisés dans le procédé et le four suivant l'invention sont notamment décrits dans FR-A-2837916, EP-A-1195557 EP-A-0763692 et EP-A-1016825 au nom de la demanderesse et sont commercialisés par la société demanderesse sous les dénominations commerciales ALGLASS^{™} VM.

Il est à noter que, bien que l'invention permette de réaliser une bonne couverture du bain, et donc de la charge (matières vitrifiables et verre fondu) par les deux flammes et un bon profil thermique avec les deux oxy-brûleurs montés dans la paroi amont, ceci n'exclut pas la présence d'autres brûleurs et/ou injecteurs ou lances de combustible et/ou de comburant dans la chambre de fusion et notamment dans la zone aval, et notamment dans la zone d'affinage dans le cas d'une chambre de fusion/affinage.

Toutefois, les deux oxy-brûleurs montés dans la paroi amont fournissent de manière utile au moins 80% de l'énergie de fusion dans la chambre. Il est en particulier envisagé de fournir au moins 90%, voire la totalité de l'énergie de fusion dans la chambre au moyen de ces deux oxy-brûleurs montés dans la paroi amont.

Grâce au positionnement des deux oxy-brûleurs dans la paroi amont, il est possible de positionner le au moins un premier échangeur de chaleur pour le préchauffage d'au moins une partie du comburant de ces oxy-brûleurs essentiellement et de préférence entièrement derrière la paroi amont (vue de l'intérieure de la chambre ou en se positionnant devant la paroi aval) et de limiter ainsi l'encombrement.

Le au moins un premier échangeur de chaleur situé derrière la paroi amont peut être un échangeur direct traversé par les fumées évacuées et dans lequel au moins une partie du comburant est préchauffé par échange thermique avec lesdites fumées, lesdites fumées étant dans ce cas le fluide caloporteur. Cette solution, bien que d'un coût raisonnable, ne semble cependant pas apporter un niveau de sécurité suffisant.

De préférence, le au moins un premier échangeur situé derrière la paroi amont est de préférence un échangeur indirect. Dans ce cas, la au moins une partie du comburant est préchauffé par échange thermique avec un fluide caloporteur autre que les fumées, ledit fluide caloporteur ayant à son tour récupéré de l'énergie thermique des fumées par un deuxième échange thermique.

L'échange thermique entre la au moins une partie de comburant et le fluide caloporteur et l'échange thermique entre le fluide caloporteur et les fumées peuvent être réalisé dans un même (premier) échangeur de chaleur ou dans deux échangeurs séparés, au moins l'échangeur pour l'échange thermique entre le fluide caloporteur et le comburant (premier échangeur) étant positionné essentiellement derrière la paroi amont.

US-A-6071116 etUS-A-6250916 de la société Air Liquide décrivent des dispositifs pour l'échange de chaleur indirect pouvant avantageusement être utilisés dans le cadre de la présente invention.

De préférence, on préchauffe également au moins une partie, et de préférence la totalité, du combustible avant son alimentation aux deux oxy-brûleurs dans au moins un premier échangeur de chaleur situé à l'extérieur de la chambre et essentiellement derrière la paroi amont. Les considérations ci-dessus concernant le préchauffage du comburant s'appliquent également au préchauffage du combustible.

Le procédé peut être réalisé avec des combustibles divers. Les combustibles gazeux sont préférés.

La au moins une partie dudit comburant est, comme décrit ci-dessus, avantageusement préchauffée par échange thermique indirect avec les fumées évacuées, ce qui permet d'augmenter la fiabilité et la sécurité du procédé.

Pour augmenter le gain énergétique, il est également possible de préchauffer au moins une partie dudit combustible par échange thermique avec un fluide caloporteur dans le au moins un premier échangeur de chaleur, ce préchauffage étant également de préférence réalisé par échange thermique indirect avec les fumées évacuées.

L'échange thermique indirect peut être réalisé dans un seul échangeur de chaleur dans lequel un fluide caloporteur est chauffé par échange thermique direct avec les fumées évacuées et le comburant, et éventuellement le combustible, sont chauffés par échange thermique direct avec le fluide caloporteur ainsi chauffé. Toutefois, il est souvent utile d'effectuer les deux échanges thermiques directs dans deux échangeurs séparés.

Ainsi, suivant une forme de réalisation du procédé, un fluide caloporteur, tel que de l'air ou un gaz inerte, est chauffé par échange thermique avec au moins une partie des fumées évacuées dans au moins un deuxième échangeur de chaleur situé à proximité de la au moins une ouverture d'évacuation. Le fluide caloporteur chauffé est amené vers le au moins un premier échangeur de chaleur situé derrière la paroi amont où à lieu le préchauffage d'au moins une partie dudit comburant et éventuellement au moins une partie dudit combustible.

Suivant une forme de réalisation alternative du procédé, la au moins une partie des fumées évacuées est amenée vers au moins un deuxième échangeur de chaleur situé à proximité de la paroi amont, ce au moins un deuxième échangeur de chaleur pouvant notamment également être positionné essentiellement derrière la paroi amont. Un fluide caloporteur, tel que de l'air ou un gaz inerte, est chauffé par échange thermique avec la au moins une partie des fumées évacuées dans le au moins un deuxième échangeur de chaleur. Le fluide caloporteur chauffé est amené vers le au moins un premier échangeur de chaleur situé derrière la paroi amont pour le préchauffage d'au moins une partie dudit comburant et éventuellement au moins une partie dudit combustible.

La présente invention concerne également un four pour la fusion de matières vitrifiables et l'obtention de verre fondu permettant de réaliser le procédé décrit ci-dessus.

Le four suivant l'invention comporte une chambre de fusion définie par une paroi amont, une paroi aval, des parois latérales, une sole et une voûte et comportant une zone amont du côté de la paroi amont et une zone aval du côté de la paroi aval. Cette chambre a une superficie interne inférieure ou égale à 200 m².

Le four de fusion comprend également au moins une ouverture d'enfournement en matières vitrifiables située dans la zone amont, au moins une ouverture de sortie de verre fondu étant située dans la zone aval.

Le four suivant l'invention comprend aussi au moins une ouverture d'évacuation de fumées et des moyens pour la récupération de chaleur des fumées évacuées

Le four comprend également deux oxy-brûleurs qui débouchent dans la chambre de fusion à travers la paroi amont et qui sont situés de côté et autre du plan vertical comprenant l'axe longitudinal de la chambre de fusion. Chacun de ces deux oxy-brûleurs est équipé de moyens d'alimentation en comburant et de moyens d'alimentation en combustible.

Le four suivant l'invention se caractérise notamment en ce que les deux oxy-brûleurs qui débouchent dans la chambre de fusion à travers la paroi amont sont aptes à fournir au moins 70% de l'énergie dans la chambre de fusion et comportent des injecteurs de comburant et de combustibles de manière à pouvoir réaliser deux flammes dans la chambre de combustion selon des axes d'injection qui se rejoignent à une distance d de la paroi amont entre 1/3 et 3/4 de la longueur L de la chambre.

La superficie interne de la chambre de fusion est de préférence de 10 à 90 m².

Les deux oxy-brûleurs sont de préférence positionnés symétriquement de côté et autre par rapport au plan vertical comprenant l'axe longitudinal de la chambre de fusion.

Les axes d'injection des deux flammes se rejoignent de préférence à une distance d de la paroi amont d'environ 2/3 de la longueur L de la chambre (entre 7/12 et 9/12 de la longueur L de la chambre).

Les axes d'injection des deux flammes se rejoignent de préférence dans le plan vertical comprenant l'axe longitudinal de la chambre de fusion.

Les moyens d'alimentation en comburant sont connectés à une source de comburant ayant une teneur en oxygène d'au moins 70%vol. Cette teneur en oxygène est de manière utile supérieure à 80%. Elle peut notamment être supérieure à 85%vol, être de préférence d'au moins 90%vol, plus de préférence d'au moins 95%vol, voire d'au moins 99%vol.

Les moyens d'alimentation en combustible sont de préférence connectés à une source de combustible gazeux. Toutefois, l'invention n'est pas limitée aux fours de fusion fonctionnant avec un combustible gazeux, mais inclut également des fours fonctionnant avec d'autres combustibles, tels que les combustibles liquides.

Les deux oxy-brûleurs sont de préférence des oxy-brûleurs à combustion étagée et/ou à impulsion variable.

Les moyens pour la récupération de chaleur des fumées évacuées comportent avantageusement au moins un premier échangeur de chaleur, ledit au moins un premier échangeur de chaleur étant situé à l'extérieur de la chambre de fusion et essentiellement derrière la paroi amont. Au moins une partie des moyens d'alimentation en comburant est connectée auxdits au moins un échangeur de chaleur de manière à permettre le préchauffage d'au moins une partie du comburant par échange thermique avec un fluide caloporteur.

De manière avantageuse, au moins une partie des moyens d'alimentation en combustible est connectée auxdits au moins un premier échangeur de chaleur de manière à permettre le préchauffage d'au moins une partie du combustible par échange thermique avec un fluide caloporteur.

Le au moins un premier échangeur de chaleur peut être un échangeur de chaleur direct ou indirect.

Suivant une forme de réalisation permettant le préchauffage indirect d'au moins une partie du comburant, et éventuellement aussi d'au moins une partie du combustible, le four comprend également :
- au moins un deuxième échangeur de chaleur situé à proximité de la au moins une ouverture d'évacuation de fumées pour le chauffage d'un fluide caloporteur par échange thermique avec au moins une partie des fumées évacuées,
- des conduits permettant d'amener le fluide caloporteur chauffé vers le au moins un premier échangeur de chaleur situé derrière la paroi amont.

Suivant une forme de réalisation alternative, le four comporte :
- au moins un deuxième échangeur de chaleur situé à proximité de la paroi amont pour le chauffage d'un fluide caloporteur par échange thermique avec au moins une partie des fumées évacuées,
- des conduits permettant d'amener la au moins une partie des fumées évacuées de l'ouverture d'évacuation vers le au moins un deuxième échangeur de chaleur,
- des conduits permettant d'amener le fluide caloporteur chauffé vers le au moins un premier échangeur de chaleur situé derrière la paroi amont

Le four de fusion est de manière utile un four pour la fabrication de verre creux et de verre gobeleterie destiné à alimenter des machines de formage en verre fondu.

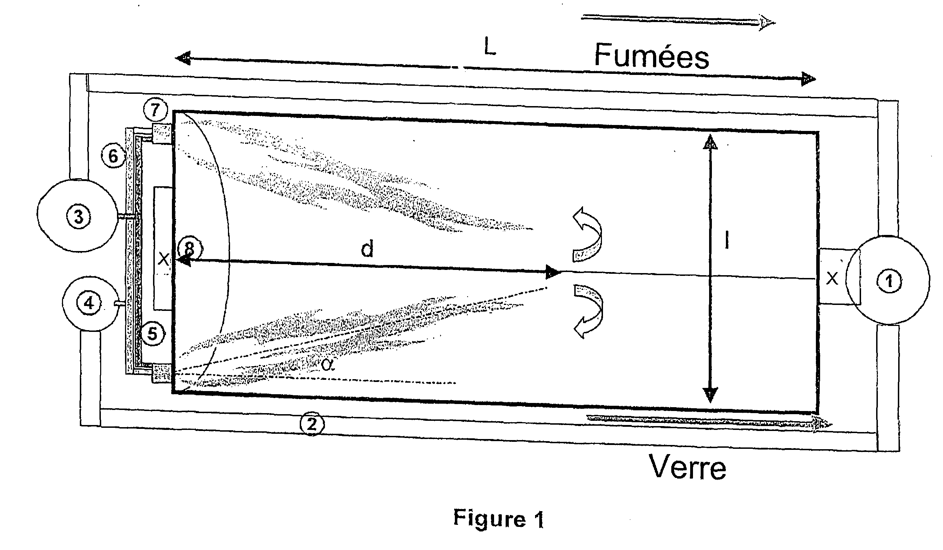

L'invention est illustrée ci-après par un exemple spécifique de mise en oeuvre de l'invention, référence étant faite à la figure qui est une représentation schématique d'une coupe transversale d'un four de fusion suivant l'invention.

Comme illustré dans la figure, la chambre de fusion, qui est une chambre de fusion/affinage, présente une longueur L et une largeur 1. La chambre est équipée de deux oxy-brûleurs 7 à combustion étagée débouchant dans la chambre de fusion à travers la paroi amont. Lesdits oxy-brûleurs sont positionnés symétriquement de côté et autre du plan vertical comportant l'axe longitudinal X-X de la chambre.

Chacun des deux oxy-brûleurs comprend un bloc en matière réfractaire comportant un premier passage pour l'injection de combustible, un passage de section annulaire autour dudit premier passage pour l'injection du comburant primaire, dit « de gainage », des passages à faible distance du premier passage pour l'injection de comburant secondaire et à plus grande distance du premier passage des passages pour l'injection du comburant secondaire.

La société demanderesse commercialise sous la dénomination commerciale ALGLASS ™ SUN, des brûleurs comportant deux blocs réfractaires, chaque bloc comportant des passages de combustible et de comburant tels que décrits ci-dessus, et étant donc apte à être utilisé comme un des deux oxy-brûleurs suivant l'invention. Dans ce cas, on considérera, dans le contexte de la présente invention, que chacun des deux blocs constitue à lui seul un oxy-brûleur.

L'ouverture d'évacuation des fumées est située dans la paroi aval.

Les fumées évacuées sont amenées vers le récupérateur fumées/air ou deuxième échangeur de chaleur 1 situé à proximité de l'ouverture d'évacuation. Dans ce second échangeur de chaleur, de l'air, utilisé comme fluide caloporteur, est chauffé par échange thermique avec les fumées évacuées.

L'air chaud ainsi obtenu est amené par les conduits 2 vers les deux premiers échangeurs de chaleur 3 et 4 positionnés derrière la paroi amont.

Dans l'échangeur air/oxygène 3, le comburant oxygène est préchauffé par échange thermique avec l'air chaud avant d'être amené par la connexion oxygène vers les deux oxy-brûleurs 7.

Dans l'échangeur air/gaz naturel 4, le combustible gaz naturel est préchauffé par échange thermique avec l'air préchauffé avant d'être amené par la connexion gaz naturel vers les oxy-brûleurs 7

Les deux oxy-brûleurs 7 sont orientés de manière de manière à ce que les axes d'injection des flammes des deux brûleurs se rejoignent à un point d'intersection située dans le plan vertical comprenant l'axe longitudinal X-X de la chambre, de manière à y créer un point chaud.

L'angle α desdits brûleurs est choisi en fonction de la localisation souhaitée pour le point chaud. Par exemple, pour un point chaud situé à une distance d = 2 x L/3, tan a = 1/(2 x d) = 3 x 1/(4 x L).

Selon un exemple du procédé et du four suivant l'invention, la chambre de fusion a une longueur de 9m et une largeur de 4, 5m.

Les paramètres de ce procédé sont donnés dans le tableau suivant :

| Fumées | Composition : | 37%vol CO₂, 50%vol H₂O, 9%vol N₂, 5%vol O₂ |
|---|---|---|
| | Température: | 1350°C à 1450°C |
| | Débit: | ≤ 20000 Nm³/h |
| Comburant | Composition : | Oxygène (>90%vol) |
| | Température de préchauffage : | 550°C |
| Combustible (gaz naturel) | Composition : | Gaz naturel |
| | Température de préchauffage | 450°C |
| Fluide caloporteur | Composition : | Air |

## Revendications

1. Procédé pour l'obtention de verre fondu par fusion de matières vitrifïables dans une chambre de fusion définie par une paroi amont, une paroi aval, des parois latérales, une sole et une voûte et ayant une superficie intérieure inférieure ou égale à 200 m², de préférence de 10 à 90 m², ladite chambre comportant une zone amont du côté de la paroi amont, une zone aval du côté de la paroi aval et ayant une axe longitudinal qui s'étend entre la paroi amont et la paroi aval,
procède dans lequel ;
• on enfourne des matières vitrifiables dans la zone amont,
• on fond les matières vitrifiables avec obtention de verre fondu en fournissant de l'énergie de fusion dans la chambre de fusion, au moins une partie de l'énergie de fusion étant fournie en alimentant deux oxy-brûleurs (7) en combustible et en comburant, ledit comburant ayant une teneur en oxygène d'au moins 70 %vol et de préférence d'au moins 80%vol, et en injectant le combustible et le comburant dans la chambre de fusion au moyen desdits deux oxy-brûleurs (7) de manière à créer deux flammes présentant une axe d'injection et des fumées, les deux oxy-brûleurs débouchant dans la chambre de fusion à travers la paroi amont et étant situés de côté et autre du plan vertical comprenant l'axe longitudinal (X-X) de la chambre de fusion,
• on évacue le verre fondu dans la zone aval, et
• on évacue les fumées de la chambre de fusion par au moins une ouverture d'évacuation de fumées,
et dans lequel les axes d'injection des deux flammes se rejoignent, de préférence dans le plan vertical comprenant l'axe longitudinal (X-X) de la chambre de fusion, à une distance d de la paroi amont entre 1/3 et ¾ de la longueur L de la chambre de fusion, de préférence d'environ 2/3 de la longueur de la chambre de fusion,
**caractérisé en ce que** au moins 70% de l'énergie de fusion est fournie par lesdits deux oxy-brûleurs (7).

2. Procédé selon la revendication 1, dans lequel on transporte au moins une partie des fumées évacuées vers des moyens de récupération de chaleur (1, 3, 4) et on préchauffe au moins une partie du comburant dans les moyens de récupération de chaleur (1, 3, 4) avant son alimentation aux deux oxy-brûleurs (7),

3. Procédé selon la revendication 2, dans lequel les moyens de récupération de chaleur (1, 3, 4) comportent au moins un premier échangeur de chaleur (3, 4) situé à l'extérieur de la chambre de fusion et essentiellement derrière la paroi amont.

4. Procédé selon la revendication 3, dans lequel on préchauffe au moins une partie du comburant par échange thermique avec un fluide caloporteur dans le au moins un premier échangeur de chaleur (3, 4) avant son alimentation aux deux oxy-brûleurs (7).

5. Procédé suivant la revendication 4, dans lequel on chauffe le fluide caloporteur par échange thermique avec au moins une partie des fumées évacuées dans au moins un deuxième échangeur de chaleur (1) situé à proximité de la au moins une ouverture d'évacuation, et on amène le fluide caloporteur chauffé vers le au moins un premier échangeur de chaleur (3, 4) situé derrière la paroi amont pour le préchauffage d'au moins une partie dudit comburant et éventuellement d'au moins une partie dudit combustible.

6. Procédé suivant la revendication 4, dans lequel on amené au moins une partie des fumées évacuées vers au moins un deuxième échangeur de chaleur situé à proximité de la paroi amont, on chauffe le fluide caloporteur par échange thermique avec la au moins une partie des fumées évacuées dans le au moins un deuxième échangeur de chaleur, on amené le fluide caloporteur chauffé vers le au moins un premier échangeur de chaleur (3, 4) situé derrière la paroi amont pour le préchauffage d'au moins une partie dudit comburant et éventuellement au moins une partie dudit combustible.

7. Procédé suivant l'une des revendications 1 à 6, dans lequel les deux oxy-brûleurs (7) sont positionnés symétriquement de côté et autre par rapport au plan vertical comprenant l'axe longitudinal (X-X) de la chambre de fusion.

8. Procédé selon l'une quelconque des revendications 1 à 7, dans lequel le comburant a une teneur en oxygène d'au moins 85%vol, de préférence d'au moins 90%vol, encore de préférence d'au moins 95%viol.

9. Four de fusion de matières vitrifiables comportant :
• une chambre de fusion définie par une paroi amont, une paroi aval, des parois latérales, une sole et une voûte et comportant une zone amont, du côté de la paroi amont et une zone aval du côte de la paroi aval, ladite chambre de fusion comportant une superficie inférieure ou égale à 200 m², et de préférence de 10 à 90 m² et ayant et ayant une axe longitudinal qui s'étend entre a paroi amont et la paroi aval,
• au moins une ouverture d'enfournement en matières vitrifiables située dans la zone amont,
• au moins une ouverture de sortie de verre fondu située dans la zone aval,
• au moins une ouverture d'évacuation de fumées, et
• deux oxy-brûleurs (7) débouchant dans la chambre de fusion à travers la paroi amont et situés de côté et autre du plan vertical comprenant l'axe longitudinal (X-X) de la chambre de fusion, chaque oxy-brûleur (7) étant équipé de moyens d'alimentation en comburant et de moyens d'alimentation en combustible,
les deux oxy-brûleurs comportant des injecteurs de comburant et des injecteurs de combustible de manière à pouvoir réaliser deux flammes dans la chambre de fusion selon des axes d'injection qui se rejoignent, de préférence dans le plan vertical comprenant l'axe longitudinal de la chambre de fusion, à une distance d de la paroi amont entre 1/3 et ¾ de la longueur de la chambre, de préférence d'environ 2/3 de la longueur de la chambre ledit four étant **caractérisé en ce que** les deux oxy-brûleurs 7 sont aptes à fournir au moins 70% de l'énergie dans la chambre de fusion.

10. Four suivant la revendication 9, dans lequel les deux oxy-brûleurs (7) sont positionnés symétriquement de côté et autre par rapport au plan vertical comprenant l'axe longitudinal (X-X) de la chambre de fusion.

11. Four suivant l'une des revendications 9 et 10, dans lequel les moyens d'alimentation en comburant sont connectés à une source de comburant ayant une teneur en oxygène d'au moins 70%vol, de préférence supérieure à 80%, encore de préférence supérieure à 85%vol, et plus de préférence encore d'au moins 90%vol.

12. Four suivant l'une des revendications 9 à 11, comprenant des moyens (1, 3, 4) pour la récupération de chaleur des fumées évacuées, lesdits les moyens (1, 3, 4) pour la récupération de chaleur des fumées évacuées comportant au moins un premier échangeur de chaleur (3, 4), ledit au moins un premier échangeur de chaleur (3, 4) étant situé à l'extérieur de la chambre et essentiellement derrière la paroi amont.

13. Four suivant la revendication 12, dans lequel les moyens d'alimentation en comburant sont connectés auxdits au moins un premier échangeur de chaleur (3) de manière à permettre le préchauffage d'au moins une partie du comburant par échange thermique avec un fluide caloporteur.

14. Four suivant la revendication 13, comportant :
• au moins un deuxième échangeur de chaleur (1) situé à proximité de la au moins une ouverture d'évacuation de fumées pour le chauffage d'un fluide caloporteur par échange thermique avec au moins une partie des fumées évacuées,
• des conduits (2) permettant d'amener le fluide caloporteur chauffé vers le au moins un premier échangeur de chaleur (3, 4) situé derrière la paroi amont.

15. Four suivant la revendication 13, comportant :
• au moins un deuxième échangeur de chaleur situé à proximité de la paroi amont le chauffage d'un fluide caloporteur par échange thermique avec au moins une partie des fumées évacuées.
• des conduits permettant, d'amener la au moins une partie des fumées évacuées de l'ouverture d'évacuation vers le au moins un deuxième: échanger de chaleur,
• des conduits permettant d'amener le fluide caloporteur chauffé vers le au moins un premier échangeur de chaleur (3, 4) situé derrière la paroi amont.

## Claims

1. Method for obtaining molten glass by melting batch materials in a melting chamber defined by an upstream wall, a downstream wall, side walls, a hearth and a roof and having an internal surface area of less than or equal to 200 m², preferably from 10 to 90 m², said chamber having an upstream zone beside the upstream wall, a downstream zone beside the downstream wall and having a longitudinal axis that extends between the upstream wall and the downstream wall,
in which method:
• the batch materials are charged into the upstream zone,
• the batch materials are melted to obtain molten glass by providing melting energy in the melting chamber, at least part of the melting energy being provided by supplying two oxy-fuel burners (7) with fuel and oxidant, said oxidant having an oxygen content of at least 70% v/v, and preferably at least 80% v/v, and by injecting fuel and oxidant into the melting chamber by means of said two oxy-fuel burners (7) so as to create two flames having an injection axis and flue gas, the two oxy-fuel burners emerging in the melting chamber through the upstream wall and being situated either side of the vertical plane comprising the longitudinal axis (X-X) of the melting chamber,
• molten glass is discharged from the downstream zone, and
• flue gas is discharged from the melting chamber by means of an opening for discharging flue gas,
and in which the injection axes of the two flames meet, preferably in the vertical plane comprising the longitudinal axis (X-X) of the melting chamber, at a distance d from the upstream wall between 1/3 and 3/4 of the length L of the melting chamber, preferably by approximately 2/3 of the length of the melting chamber, **characterized in that** at least 70% of the melting energy is provided by said two oxy-fuel burners.

2. Method according to Claim 1, in which at least part of the discharged flue gas is conveyed to heat recovery means (1,3,4) and at last part of the oxidant is preheated in the heat recovery means (1,3,4) before it supplies the two oxy-fuel burners (7).

3. Method according to Claim 2, in which the heat recovery means (1,3,4) comprise at least one heat exchanger (3,4) situated outside the melting chamber and essentially behind the upstream wall.

4. Method according to Claim 3, in which at least part of the oxidant is preheated by heat exchange with a heat transfer fluid in the at least first heat exchanger (3,4) before supplying the two oxy-fuel burners (7).

5. Method according to Claim 4, in which the heat transfer fluid is heated by heat exchange with at least part of the discharged flue gas in at least one second heat exchanger (1) situated close to the at least one discharge opening, and the heated heat transfer fluid is led to the at least first heat exchanger (3, 4) situated behind the upstream wall for preheating at least part of said oxidant and possibly at least part of said fuel.

6. Method according to Claim 4, in which at least part of the discharged flue gas is led to at least one second heat exchanger situated close to the upstream wall, the heat transfer fluid is heated by heat exchange with at the least part of the discharged flue gas in the at least one second heat exchanger, the heated heat transfer fluid is led to the at least one first heat exchanger (3,4) situated behind the upstream wall for preheating at least part of said oxidant and possibly at least part of said fuel.

7. Method according to one of Claims 1 to 6, in which the two oxy-fuel burners are positioned symmetrically either side relative to the vertical plane comprising the longitudinal axis (X-X) of the melting chamber.

8. Method according to any one of Claims 1 to 7, in which the oxidant has an oxygen content of at least 85% v/v, preferably at least 90% v/v and even more preferably at least 95% v/v.

9. Furnace for melting batch materials having:
• a melting chamber defined by an upstream wall, a downstream wall, side walls, a hearth and a roof and having an upstream zone beside the upstream wall and a downstream zone beside the downstream wall, said melting chamber having an internal surface area of less than or equal to 200 m² and preferably 10 to 90 m² and having a longitudinal axis that extends between the upstream wall and the downstream wall,
• at least one opening for charging batch materials situated in the upstream zone,
• at last one outlet for molten glass situated in the downstream zone,
• at least one opening for discharging flue gas, and
• two oxy-fuel burners (7) emerging in the melting chamber through the upstream wall and situated either side of the vertical plane comprising the longitudinal axis (X-X) of the melting chamber, each oxy-fuel burner (7) being equipped with means for feeding in oxidant and means for feeding in fuel,
wherein the two oxy-fuel burners having oxidant injectors and fuel injectors so as to be able to produce two flames in the melting chamber along injection axes that meet, preferably in the vertical plane comprising the longitudinal axis of the melting chamber, at a distance d from the upstream wall between 1/3 and 3/4 of the length of the chamber, preferably approximately 2/3 of the length of the chamber, said furnace being **characterized in that** the two oxy-fuel burners (7) are capable of providing at least 70% of the energy.

10. Furnace according to Claim 9, in which the two oxy-fuel burners (7) are positioned symmetrically either side relative to the vertical plane comprising the longitudinal axis (X-X) of the melting chamber.

11. Furnace according to either one of Claims 9 and 10, in which the means for feeding in oxidant are connected to an oxidant source having an oxygen content of at least 70% v/v, preferably greater than 80% v/v, preferably greater than 85%, and even more preferably at least 90% v/v.

12. Furnace according to one of Claims 9 to 11, comprising means (1,3,4) for recovering heat from the discharged flue gas, said means (1,3,4) for recovering heat from the discharged flue gas comprising at least one first heat exchanger (3,4), said at least one first heat exchanger (3,4) being situated outside the chamber and essentially behind the upstream wall.

13. Furnace according to Claim 12, in which the means for feeding in oxidant are connected to said at least one first heat exchanger (3) so as to enable at least part of the oxidant to be preheated by heat exchange with the heat transfer fluid.

14. Furnace according to Claim 13, including:
• at least one second heat exchanger (1) situated close to the at least one opening for discharging flue gas for heating a heat transfer fluid by heat exchange with at least part of the discharged flue gas,
• ducts (2) enabling the heated heat transfer fluid to be led to the at least one first heat exchanger (3,4) situated behind the upstream wall.

15. Furnace according to Claim 13, including:
• at least one second heat exchanger situated close to the upstream wall for heating a heat transfer fluid by heat exchange with at least part of the discharged flue gas,
• ducts enabling the at least part of the flue gas evacuated through the evacuation opening to be led to the at least one second heat exchanger,
• ducts enabling the heated heat transfer fluid to be led to the at least one first heat exchanger (3,4) situated behind the upstream wall.

## Patentansprüche

1. Verfahren zum Gewinnen von geschmolzenem Glas durch Schmelzen von verglasbaren Substanzen in einer Schmelzkammer, die durch eine stromaufseitige Wand, eine stromabseitige Wand, Seitenwände, eine Sohle und eine Decke definiert ist und einen inneren Oberflächeninhalt besitzt, der kleiner oder gleich 200 m² ist und vorzugsweise 10 bis 90 m² beträgt, wobei die Kammer eine stromaufseitige Zone auf Seiten der stromaufseitigen Wand, eine stromabseitige Zone auf Seiten der stromabseitigen Wand und eine Längsachse, die sich zwischen der stromaufseitigen Wand und der stromabseitigen Wand erstreckt, besitzt,
wobei in dem Verfahren:
- die verglasbaren Substanzen in der stromaufseitigen Zone in den Ofen eingesetzt werden,
- die verglasbaren Substanzen unter Gewinnung von geschmolzenem Glas geschmolzen werden, indem in die Schmelzkammer Schmelzenergie eingebracht wird, wobei wenigstens ein Teil der Schmelzenergie zugeführt wird durch Versorgen von zwei Sauerstoffbrennern (7) mit Brennstoff und mit einem Sauerstoffträger, wobei der Sauerstoffträger einen Sauerstoffgehalt von wenigstens 70 Vol.-% und vorzugsweise von wenigstens 80 Vol.-% besitzt, und durch Einleiten des Brennstoffs und des Sauerstoffträgers in die Schmelzkammer mittels der zwei Sauerstoffbrenner (7) in der Weise, dass zwei Flammen, die eine Einleitungsachse besitzen, und Abgase erzeugt werden, wobei die zwei Sauerstoffbrenner in die Schmelzkammer durch die stromaufseitige Wand münden und sich beiderseits der vertikalen Ebene befinden, die die Längsachse (X-X) der Schmelzkammer enthält,
- das geschmolzene Glas in die stromabseitige Zone abgeführt wird und
- die Abgase der Schmelzkammer durch wenigstens eine Abgasabführungsöffnung abgeführt werden,
und in dem die Einleitungsachsen der zwei Flammen sich vorzugsweise in der vertikalen Ebene, die die Längsachse (X-X) der Schmelzkammer enthält, in einem Abstand d von der stromaufseitigen Wand im Bereich von 1/3 bis 3/4 der Länge L der Schmelzkammer, vorzugsweise von etwa 2/3 der Länge der Schmelzkammer, vereinigen,
**dadurch gekennzeichnet, dass** wenigstens 70 % der Schmelzenergie durch die zwei Sauerstoffbrenner (7) zugeführt wird.

2. Verfahren nach Anspruch 1, wobei wenigstens ein Teil der abgeführten Abgase zu Wärmerückgewinnungsmitteln (1, 3, 4) transportiert wird und wenigstens ein Teil des Sauerstoffträgers in den Wärmerückgewinnungsmitteln (1, 3, 4) vorerwärmt wird, bevor er zu den zwei Sauerstoffbrennern (7) geschickt wird.

3. Verfahren nach Anspruch 2, wobei die Wärmerückgewinnungsmittel (1, 3, 4) wenigstens einen ersten Wärmetauscher (3, 4) enthalten, der sich außerhalb der Schmelzkammer und im Wesentlichen hinter der stromaufseitigen Wand befindet.

4. Verfahren nach Anspruch 3, wobei wenigstens ein Teil des Sauerstoffträgers durch Wärmeaustausch mit einem Wärmeträgerfluid in dem wenigstens einen ersten Wärmetauscher (3, 4) vorerwärmt wird, bevor er zu den zwei Sauerstoffbrennern (7) geschickt wird.

5. Verfahren nach Anspruch 4, wobei das Wärmeträgerfluid durch Wärmeaustausch mit wenigstens einem Teil der abgeführten Abgase in wenigstens einem zweiten Wärmetauscher (1), der sich in der Nähe der wenigstens einen Abführungsöffnung befindet, erwärmt wird und das erwärmte Wärmeträgerfluid zu dem wenigstens einen ersten Wärmetauscher (3, 4) geleitet wird, der sich hinter der stromaufseitigen Wand befindet, um wenigstens einen Teil des Sauerstoffträgers und eventuell wenigstens einen Teil des Brennstoffs vorzuerwärmen.

6. Verfahren nach Anspruch 4, wobei wenigstens ein Teil der abgeführten Abgase wenigstens zu einem zweiten Wärmetauscher geleitet wird, der sich in der Nähe der stromaufseitigen Wand befindet, das Wärmeträgerfluid durch Wärmeaustausch mit wenigstens einem Teil der abgeführten Abgase in dem wenigstens einen zweiten Wärmetauscher erwärmt wird, und das erwärmte Wärmeträgerfluid zu dem wenigstens einen ersten Wärmetauscher (3, 4) geleitet wird, der sich hinter der stromaufseitigen Wand befindet, um wenigstens einen Teil des Sauerstoffträgers und eventuell wenigstens einen Teil des Brennstoffs vorzuerwärmen.

7. Verfahren nach einem der Ansprüche 1 bis 6, wobei die zwei Sauerstoffbrenner (7) symmetrisch beiderseits der vertikalen Ebene positioniert sind, die die Längsachse (X-X) der Schmelzkammer enthält.

8. Verfahren nach einem der Ansprüche 1 bis 7, wobei der Sauerstoffträger einen Sauerstoffgehalt von wenigstens 85 Vol.-%, vorzugsweise von wenigstens 90 Vol.-%, stärker bevorzugt von wenigstens 95 Vol.-%, besitzt.

9. Schmelzofen für verglasbare Substanzen, mit:
- einer Schmelzkammer, die durch eine stromaufseitige Wand, eine stromabseitige Wand, Seitenwände, eine Sohle und eine Decke definiert ist und eine stromaufseitige Zone auf Seiten der stromaufseitigen Wand und eine stromabseitige Zone auf Seiten der stromabseitigen Wand enthält, wobei die Schmelzkammer einen inneren Oberflächeninhalt besitzt, der kleiner oder gleich 200 m² ist und vorzugsweise 10 bis 90 m² beträgt, und eine Längsachse aufweist, die sich zwischen der stromaufseitigen Wand und der stromabseitigen Wand erstreckt,
- wenigstens einer Öffnung, die sich in der stromaufseitigen Zone befindet, um verglasbare Substanzen in den Ofen einzusetzen,
- wenigstens einer Auslassöffnung für geschmolzenes Glas, die sich in der stromabseitigen Zone befindet,
- wenigstens einer Öffnung zum Abführen von Abgasen und
- zwei Sauerstoffbrennern (7), die durch die stromaufseitige Wand in die Schmelzkammer münden und sich beiderseits der vertikalen Ebene befinden, die die Längsachse (X-X) der Schmelzkammer enthält, wobei jeder Sauerstoffbrenner (7) mit Mitteln für die Zufuhr eines Sauerstoffträgers und mit Mitteln für die Zufuhr eines Brennstoffs ausgerüstet sind,
wobei die zwei Sauerstoffträger Einleitungseinrichtungen für den Sauerstoffträger und Einleitungseinrichtungen für den Brennstoff enthalten, derart, dass in der Schmelzkammer zwei Flammen in zwei Einleitungsrichtungen verwirklicht werden können, die sich vorzugsweise in der vertikalen Ebene, die die Längsachse der Schmelzkammer enthält, in einem Abstand d von der stromaufseitigen Wand im Bereich von 1/3 bis 3/4 der Länge der Kammer, vorzugsweise etwa 2/3 der Länge der Kammer, vereinigen, wobei der Ofen **dadurch gekennzeichnet ist, dass** die zwei Sauerstoffbrenner (7) wenigstens 70 % der Energie in die Schmelzkammer liefern können.

10. Ofen nach Anspruch 9, wobei die zwei Sauerstoffbrenner (7) symmetrisch beiderseits der vertikalen Ebene, die die Längsachse (X-X) der Schmelzkammer enthält, positioniert sind.

11. Ofen nach einem der Ansprüche 9 und 10, wobei die Mittel für die Versorgung eines Sauerstoffträgers mit einer Quelle für einen Sauerstoffträger verbunden sind, der einen Sauerstoffgehalt von wenigstens 70 Vol.-%, vorzugsweise mehr als 80 %, stärker bevorzugt mehr als 85 Vol.-% und noch stärker bevorzugt wenigstens 90 Vol.-% besitzt.

12. Offen nach einem der Ansprüche 9 bis 11, mit Mitteln (1, 3, 4) für die Wiedergewinnung von Wärme der abgeführten Abgase, wobei die Mittel (1, 3, 4) für die Wiedergewinnung von Wärme der abgeführten Abgase wenigstens einen ersten Wärmetauscher (3, 4) enthalten, wobei sich der wenigstens eine erste Wärmetauscher (3, 4) außerhalb der Kammer und im Wesentlichen hinter der stromaufseitigen Wand befindet.

13. Ofen nach Anspruch 12, wobei die Mittel für die Versorgung mit einem Sauerstoffträger mit dem wenigstens einen ersten Wärmetauscher (3) in der Weise verbunden sind, dass eine Vorerwärmung wenigstens eines Teils des Sauerstoffträgers durch Wärmeaustausch mit einem Wärmeträgerfluid möglich ist.

14. Ofen nach Anspruch 13, mit:
- wenigstens einem zweiten Wärmetauscher (1), der sich in der Nähe der wenigstens einen Öffnung für die Abführung der Abgase befindet, um ein Wärmeträgerfluid durch Wärmeaustausch mit wenigstens einem Teil der abgeführten Abgase zu erwärmen,
- Leitungen (2), die ermöglichen, das erwärmte Wärmeträgerfluid zu dem wenigstens einen ersten Wärmetauscher (3, 4) zu leiten, der sich hinter der stromaufseitigen Wand befindet.

15. Ofen nach Anspruch 13, mit:
- wenigstens einem zweiten Wärmetauscher, der sich in der Nähe der stromaufseitigen Wand befindet, um ein Wärmeträgerfluid durch Wärmeaustausch mit wenigstens einem Teil der abgeführten Abgase zu erwärmen,
- Leitungen, die ermöglichen, wenigstens einen Teil der abgeführten Abgase von der Abführungsöffnung zu dem wenigstens einen zweiten Wärmetauscher zu leiten,
- Leitungen, die ermöglichen, das erwärmte Wärmeträgerfluid zu dem wenigstens einen ersten Wärmetauscher (3, 4) zu leiten, der sich hinter der stromaufseitigen Wand befindet.
